# EUROPEAN PATENT APPLICATION

(11) **EP 1 090 780 A2**
(43) Date of publication of application: **11.04.2001**
(21) Application number: 00308895.2
(22) Date of filing: 09.10.2000
(51) Int. Cl.: B60B 29/00, B25B 17/02

(54) **Tool for loosening wheel nuts**

(30) Priority: 08.10.1999 GB 9923699
(71) Applicant: Forrest, Karl Peter, Stockport SK8 6AP (GB)
(72) Inventor: Forrest, Karl Peter, Stockport SK8 6AP (GB)
(74) Representative: Goddard, David John

(57) **Abstract**

A tool (shown from the wheel side) for loosening a wheel nut comprises a lead screw 20 for generating with mechanical advantage an output force for rotating a lever 10 towards an elongate member 11 to which it is pivotally secured at a point 1. The screw 20 passes through a free non-threaded collar 22, a non-threaded pivoted collar 25 in lever 10 and a threaded pivoted collar (28) at a point 3 in the member 11. A socket for engaging the nut to be loosened is non-rotatably secured to the lever 10 at or adjacent the point 1 and the elongate member supports a rotatable and longitudinally adjustable wheel nut socket 2 spaced from the point 1 for engaging another wheel nut thereby to prevent rotation of the member 11. In use the head 21 of screw 20 is brought to bear on collar 25 via collar 22, and friction reducing means may be provided between head 21 and collar 22. Collar 25 being non-threaded facilitates initial fitting of the tool to the wheel whatever the alignment of the wheel nuts. Modifications of the construction are described.

## Description

The present invention relates to a tool for loosening wheel nuts, for example of road vehicles.

Many a driver has found to his cost that when it is necessary to change a wheel it is extremely difficult or impossible to loosen the nuts which secure the wheel to the vehicle. This is particularly so when some person other than the driver has secured the nuts in position, for example at a garage with a large "spider" or pneumatically energised vibrating drive, but many tight nuts may also occur because of corrosion or slight damage to a thread, or by a self-tightening process. Under such conditions, for example in an emergency roadside stop because of a puncture, the small spanner provided for the purpose frequently is insufficient, and even if further leverage on the spanner is available, this has been known to lead to bending of the spanner rather than release of the nut.

The present invention is therefore intended to provide a tool for enabling the initial loosening of a nut on a wheel, subsequent to which the normal spanner provided should enable complete removal of the nut. The tool may be such as can be readily accommodated in the same storage area as the other tools commonly provided with the vehicle, for example the jack.

In a first aspect the invention provides tool for loosening a wheel nut, the tool comprising mechanical advantage means for generating an output force along a line of action which is greater than an input force applied thereto, a lever, elongate means pivotally secured to the lever at a pivot point, and wheel nut gripping means non-rotatably secured to the lever at or adjacent the pivot point, wherein the mechanical advantage means is coupled between the lever and elongate member at locations spaced from the pivot point, and the elongate means has first wheel engaging means spaced from the pivot point for engaging a first fixed part of the wheel.

The pivot point and the axis of the gripping means may be coincident or spaced. The first engaging means may be located on the elongate member between pivot point and the coupling to the mechanical advantage means.

In a second aspect, the invention provides a tool for loosening a wheel nut, the tool comprising mechanical advantage means for generating an output force along a line of action which is greater than an input force applied thereto, a lever, wheel nut gripping means non-rotatably secured to the lever, and elongate means provided with first and second wheel engaging means for engaging respective first and second spaced fixed parts of the wheel spaced from the lever, wherein the mechanical advantage means is coupled between the lever, at a location spaced from the gripping means, and the elongate member. In this aspect, the lever is effectively a spanner having an end which is urged in the requisite direction by the action of the mechanical advantage means bearing on the elongate means, the latter being held steady on the wheel by virtue of the first and second engaging means. Relative to the first aspect, the lever still pivots with the nut to be loosened, but it is not pivoted on the elongate means.

The second fixed part may be another wheel nut. The second engaging means may be an internally cylindrical hollow socket, or an internally faceted hollow socket rotatably mounted to the elongate means. It may be detachably fixed to the elongate member.

In either of the first and second aspects, the first fixed part may be a wheel nut in which case the first wheel engaging means may be an internally cylindrical hollow socket, or an internally faceted hollow socket rotatably mounted to the elongate means. The position of the first wheel engaging means along the elongate member may be adjustable. It may be detachably fixed to the lever.

The elongate member may include a handle.

The mechanical advantage means preferably comprises a lead screw. This may include a first threaded collar pivotably mounted on the elongate means to engage the lead screw. Alternatively it may comprise a non-threaded collar pivotably mounted on the lever through which the lead screw passes, and the lead screw has a head portion for bearing on the non-threaded collar as it is tightened. In another further variant, it may comprise a second threaded collar pivotably mounted on the lever means to engage the lead screw, the second threaded collar having a different thread to the first, and the lead screw comprising different threads on respective ends to cooperate with the respective first and second collars, and in such a case the different threads may be of opposite hand. In a still further variant, it may comprise a first threaded collar pivotably mounted on the lever to engage the lead screw, and a pivotable mounting on the elongate member for holding the lead screw longitudinally captive thereat.

The mechanical advantage means can be detachably coupled to the lever and/or the elongate member.

At least one of the elongate member and the lever may open along at least one facing side so as to accommodate the other therewithin and/or to provide accommodation for the mechanical advantage means when not in use. Thus in one form of construction the elongate member and the lever may pivot in the same plane, the open sided one of the elongate member and the lever being arranged to accommodate the other as they are pivoted. Where both the elongate member and the lever are open along at least their facing sides, this can enable the member, lever and mechanical advantage means can be nested when not in use.

In a third aspect the invention provides a tool for loosening a wheel nut, the tool comprising a lever non-rotatably secured to means for engaging a first wheel nut, and mechanical advantage means for generating an output force along a line of action which is greater than an input force applied thereto, a first end of the mechanical advantage means being coupled to the lever at a location spaced from the engaging means and a second end of the mechanical advantage means on the line of action having locating means for engaging a fixed part of the wheel spaced from said wheel nut. Relative to the first and second aspects, the elongate means is omitted, the lever effectively acts as a spanner as in the second aspect, its other end being urged in the necessary direction by the mechanical advantage means which acts directly on another part of the wheel such as another wheel nut.

Again in this aspect the locating means may be an internally cylindrical hollow socket, or an internally faceted hollow socket rotatably mounted to the mechanical advantage means. The mechanical advantage means may be detachably coupled to the lever.

In the third aspect the mechanical advantage means preferably comprises a lead screw. In one form, the mechanical advantage means comprises a first threaded collar pivotably mounted on the locating means to engage the lead screw. In another form, the mechanical advantage means comprises a non-threaded collar pivotably mounted on the lever through which the lead screw passes, and the lead screw has a head portion for bearing on the non-threaded collar as it is tightened. In a third form, the mechanical advantage means comprises a second threaded collar pivotably mounted on the lever means to engage the lead screw, the second threaded collar having a different thread to the first, and the lead screw comprising different threads on respective ends to cooperate with the respective first and second collars. And in a fourth form, the mechanical advantage means comprises a first threaded collar pivotably mounted on the lever to engage the lead screw, and a pivotable mounting on the locating means for holding the lead screw longitudinally captive thereat.

In each of the above aspects the mechanical advantage means is caused to work against a position which is fixed relative to the wheel, at least when the nut is not moving, to produce a large force on the operative end of the lever in response to a relatively small applied force, so as to cause the nut at the other end of the lever to be (controllably) loosened.

Thus in a fourth aspect the invention comprises a tool for loosening a wheel nut, the tool comprising means arranged to provide a fixed location relative to a wheel, at least while the nut to be loosened remains fast, a lever provided with nut engaging means at a first location, and mechanical advantage means coupled between the fixed location and a second location on the lever spaced from the first location, the mechanical advantage means being adapted for generating an output force between said fixed location and said second location which is greater than an input force applied thereto, thereby to cause the lever to rotate and loosen a nut gripped by the nut gripping means.

In the first aspect, the fixed location is provided by the elongate means. If the pivot point and the wheel nut gripping means coincide, this provides the fixed location at all times during use. If they do not coincide, the fixed location may only be "fixed" until the nut to be loosened starts to rotate together with the lever. In the second and third aspects, the location is fixed regardless of rotation of the nut.

Further features and advantages of the invention will become apparent from a perusal of the appended claims, to which the reader is referred, and from a consideration of the following description of a preferred embodiment of the inventions and variations thereof, made with reference to the accompanying drawings, in which:
Figure 1 shows in schematic side view, from the wheel side, a tool according to the invention;

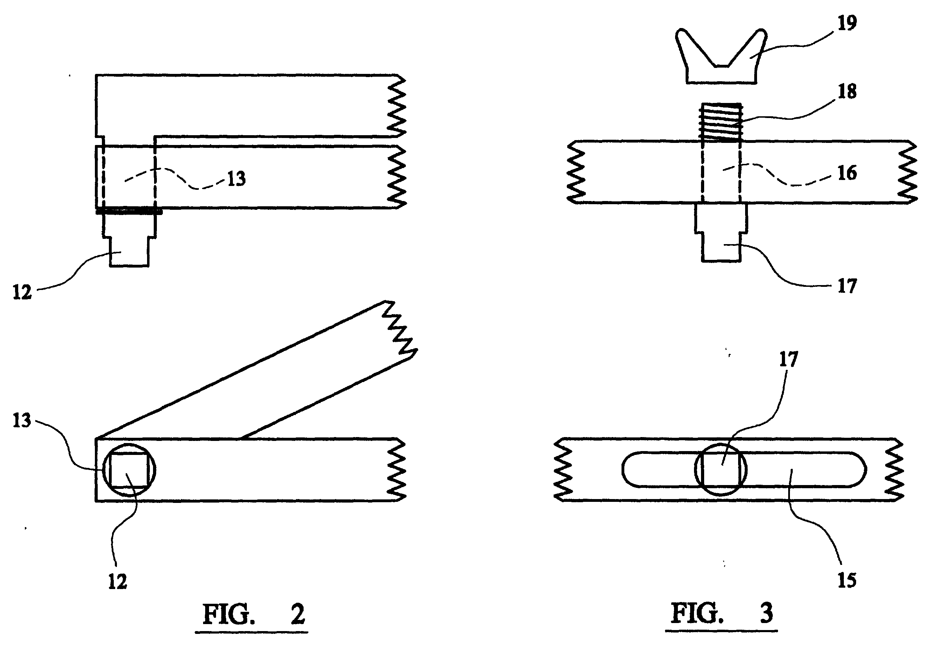

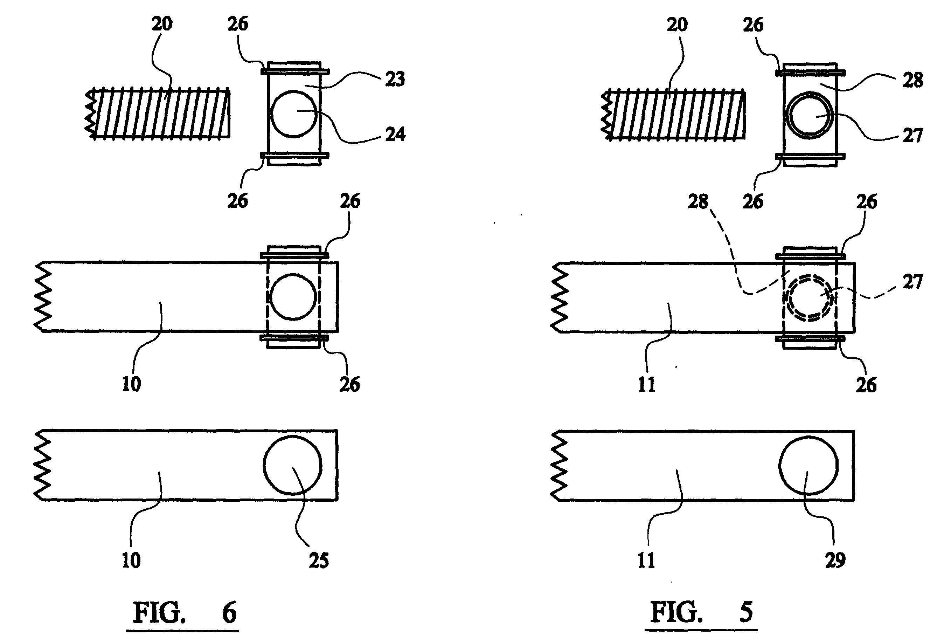

Figure 2 shows schematic side and plan views of the pivot point 1 of Figure 1;
Figure 3 shows schematic side and plan views of the adjustable wheel engaging means 2 of Figure 1;
Figure 4 shows the lead screw 5 of Figure 1;
Figure 5 shows schematic side and plan views of the coupling 3 of Figure 1;
Figure 6 shows schematic side and plan views of the coupling 4 of Figure 1; and
Figure 7 is a perspective view of another embodiment.

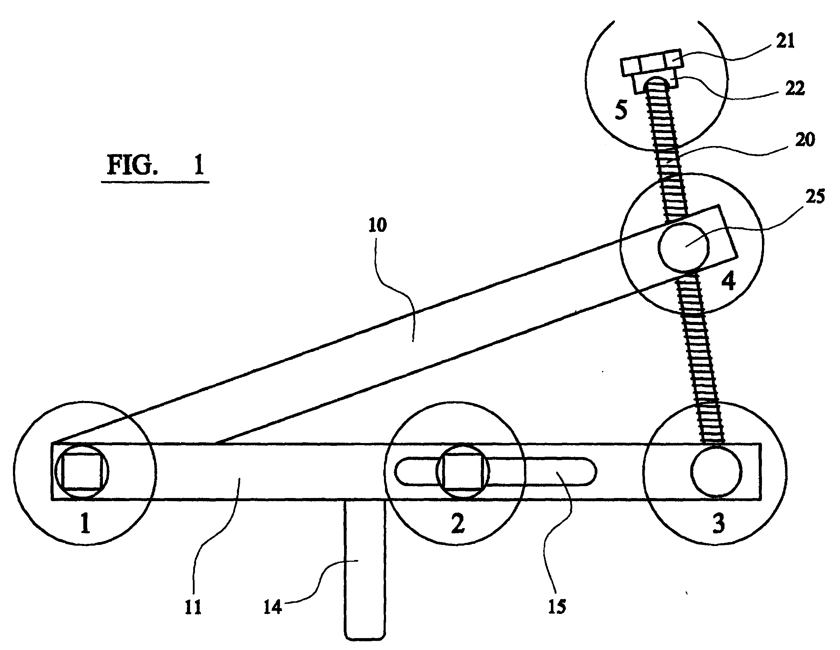

The tool of Figure 1 comprises a lever 10 in the form of a square cross-section hollow steel bar pivotally attached at 1 by a pivot projection 13 formed thereon and held by a retaining clip to an elongate bar 11 of like cross-section, the bars lying adjacent each other in plan view. The pivot projection 13 is non-rotatable relative to the lever 10, and extends through the member 11 to a mounting portion 12 for a nut socket which may be replaced to suit the size of nut to be loosened. The mounting portion is constructed in a manner known per se to enable such substitution.

The central portion of the elongate member 11 also includes a handle 14 and a slot 15. A rod 16 extending through the member terminates at one end in a nut socket mounting portion 17, similar to the portion 12, for receiving a replaceable socket in known manner. At the other end 19 the rod 16 is threaded 18 for receiving a wing nut 19, whereby, after the rod has been moved longitudinally of the member 11 to a position suiting the dimensions of the wheel in question, and in particular the nut spacing, the wing nut 19 may be tightened to maintain the rod in position. Thus the tool may be mounted on two wheel nuts, with the member 11 being rendered non-displaceable relative to the wheel (other than for removal away from the wheel).

The mounting portion 17 may be rotated relative to the member 11, either by way of being joined to the rod 16 by a rotatable connection, or by loosening the wing nut to rotate the rod itself In a modification, the nut socket is replaced by a socket with a cylindrical internal surface of appropriate dimension to fit closely over a nut. In this case rotation of the mounting portion 17 is unnecessary.

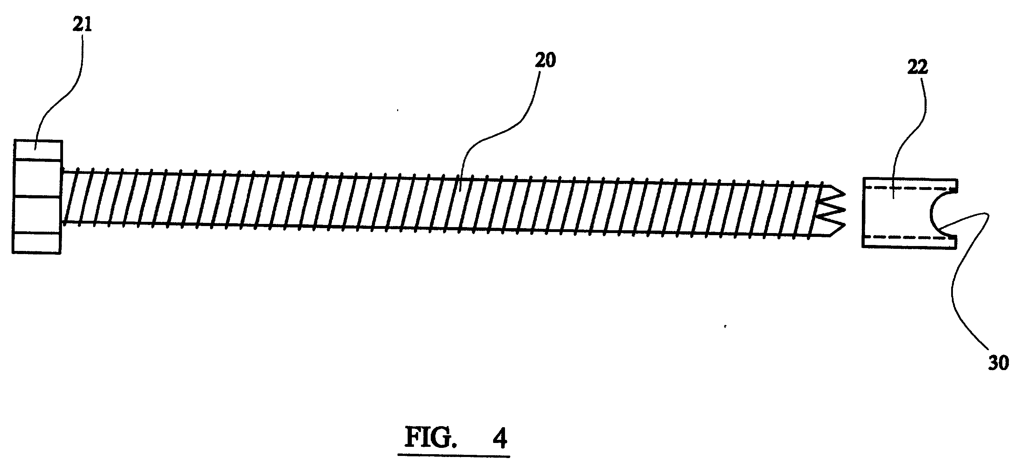

The tool further comprises a lead screw 20, Figure 4, having a head 21. Over the screw is slid a non-threaded collar 22 with a hollow arcuate end 30 remote from the head. Although not shown, it is preferred that a washer, or more preferably a ball race, is inserted between the head 21 and collar 22 to reduce friction during operation of the tool. The screw 20 then passes through a non-threaded aperture 24 of a collar 23. The collar 23 is mounted at the end of lever 10 remote from pivot point 1 for pivotal 25 movement relative to the lever 10, and is retained therein for example by clips 26. The screw then is threaded into a threaded aperture 27 of a collar 28. The collar 28 is mounted at the end of member 11 remote from pivot point 1 for pivotal 29 movement relative to the member 11, and is retained therein for example by clips 26.

It should be noted that Figure 1 shows the tool from the wheel side, and accordingly the normal direction for undoing a wheel nut will involve a clockwise rotation of the lever 10 and associated socket mounting portion 12. In use, with sockets attached to the mounting portions 12 and 17, the latter are located over the nut to be loosened and a further nut respectively. Since the nuts may have any rotational alignment, socket mounting portion 17 is rotated as necessary, with the lever 10 being pivoted relative to the bar (and the collar 23 sliding over the screw 20) until it socket fits over the nut to be loosened.

Thereafter, the screw 20 is rotated to bring the head 21 to bear on the collar 23 via the collar 22, the end of collar 22 being arcuately shaped to closely engage the cylindrical outer surface of collar 23. At this point, and with this particular construction, it is found that the tool will be fairly securely fixed relative to the wheel, enabling the tool to be left in position without manual assistance. This may occur even before engagement of collar 22 onto collar 23, because of friction in other parts of the tool. Further rotation of screw 20 then causes increasing pressure to bear on the lever 10 until the nut eventually becomes loosened in a controlled manner. Subsequently the nut may be undone and removed in the usual way.

Although the Figures show a preferred embodiment, it will be clear that the design of the tool may be altered in a number of ways without departing from the basic mode of operation, viz. providing means for giving a mechanical advantage which acts against a location substantially fixed relative to the wheel to force a lever plus socket (effectively a spanner) until the nut is moved.

Thus in variant constructions, the end of screw 20 is held captive but rotatable at member 11, and either collar 22 is threaded or the collar 23 is threaded. In the former instance, since the collar bears on the collar 23 by virtue of its threaded engagement with rod 20, there is no need for any friction reducing means relative to the head 21, and in the latter case there is no need for either the collar 22 or the associated friction reducing means. In both instances, the head 21 merely serves to enable rotation of the screw.

In a further variation, collars 23 and 28 are both threaded, but with opposite hand, so as to engage oppositely threaded halves of the screw 20. There is a loss of mechanical advantage, but an increase in speed of operation.

Other variations on this theme can be adopted, for example the use of threads of differing pitch on the two halves of the screw 20, and cooperating threaded collars 23 and 28, so as to increase or decrease mechanical advantage according to their relative hand and location.

Also the member 11 could be pivotally secured to the lever 10 at a point somewhat removed in either direction from the socket mounting member 12. In such a case, the "fixed point" against which the screw 20 acts will only be fixed until the lever moves, although movement will be rather limited in any case. Subsequent to movement of the lever 10, the mechanical advantage of this arrangement will either somewhat increase or decrease, depending on the direction in which the pivot is moved.

For dedicated use, for example for a car, the nut sockets could be non-replaceable, for example integral with the lever and rod 16. Indeed, in such a case, it is additionally or alternatively possible to do away with the adjustment provided by the slot 15, wing nut 19 and rod 16, and to secure a socket mounting means, or the socket itself to a fixed position on the member 11.

It is preferred that the points 2 and 3 are approximately equidistant from point 1 to enable the screw to be used over most of its length. The positioning of the coupling 3 at a location 3 beyond the pivot 1 and engaging means 2 lengthens the bar and correspondingly enables the length of the lever 10 to be increased for greater mechanical advantage. Where this, is not considered necessary, it would be possible to locate the points 3 at point 2 or between points 1 and 2. Where points 2 and 3 are coincident, it would then be possible to omit the member 11, since its main function of providing a rigid position against which the screw can work is then served equally well by the wheel nut itself which is engaged at position 3.

Another variant is to separate the end of lever 10 and its associated projection 13 from the end of member 13, the latter end being provided with separate wheel engaging means, and the projection 13 being non-rotatable with respect to lever 10 as before. Thus member 11 continues to be held rigidly and non-rotatably on the wheel and still serves to provide a base on which the mechanical advantage means can work to move the associated end of the lever 10, which in this variant more closely resembles a spanner.

As thus far described, the pivots 25 and 29 are effectively permanent, and the tool is correspondingly large and unwieldy even when not in use. Although this is possibly the strongest option, it is possible to adapt the tool so that various portions can be nested or otherwise collapsed.

For example, either or both of the lever 10 and member 11 can be removably coupled to the mechanical advantage means. In the embodiment, this may be effected by forming the end of the lever 10 and/or member 11 as a yoke for pivotally receiving the corresponding collar.

In particular, either or both of the lever 10 and member 11 may have an open inner face, for example by being formed with a U-shaped cross section with the open side facing the other of the lever 10 and member 11. With appropriate sizing and arrangement of the pivotal connection at 1, the lever may be nested within the member or vice versa as they are brought closer together.

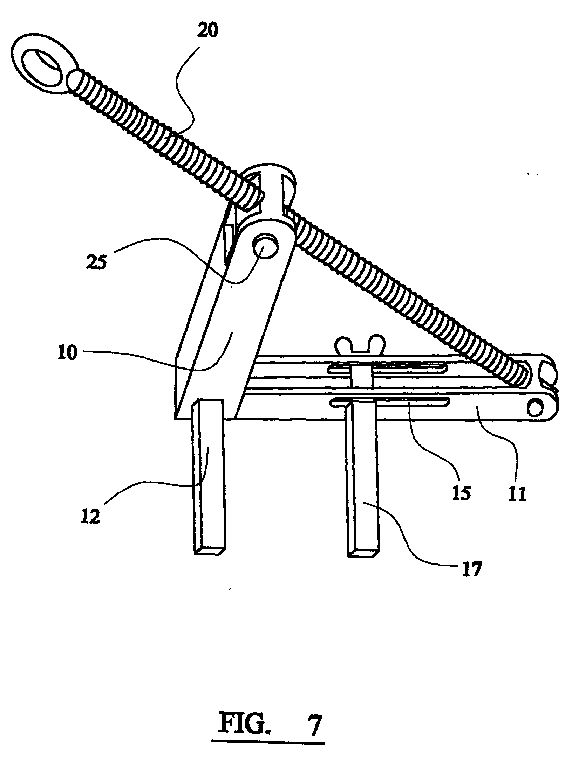

This is as illustrated in the embodiment of Figure 7 where both lever 10 and member 11 are of U-shaped cross section. In this embodiment, the upper collar 23 is threaded to receive the lead screw 20, and the screw 20 is held captive against longitudinal movement at its lower end. This obviates the need for the collar 22 of the first embodiment, and accordingly the upper end of the screw is provided with a simple looped handle (or cranked handle, not shown) for rotating it.

Furthermore, if this embodiment is additionally modified so that the screw 20 can be detached from one or both ends, and both lever 10 and member 11 are of U-shape cross-section, it is possible to nest the screw 20 within both lever 10 and member 11, thereby providing a compact method of storage with all three parts nested together.

## Claims

1. A tool for loosening a wheel nut, the tool comprising mechanical advantage means for generating an output force along a line of action which is greater than an input force applied thereto, a lever, elongate means pivotally secured to the lever at a pivot point, and wheel nut gripping means non-rotatably secured to the lever at or adjacent the pivot point, wherein the mechanical advantage means is coupled between the lever and elongate member at locations spaced from the pivot point, and the elongate means has first wheel engaging means spaced from the pivot point for engaging a first fixed part of the wheel.

2. A tool according to claim 1 wherein the first engaging means is located on the elongate member between pivot point and the coupling to the mechanical advantage means.

3. A tool for loosening a wheel nut, the tool comprising mechanical advantage means for generating an output force along a line of action which is greater than an input force applied thereto, a lever, wheel nut gripping means non-rotatably secured to the lever, and elongate means provided with first and second wheel engaging means for engaging respective first and second spaced fixed parts of the wheel spaced from the lever, wherein the mechanical advantage means is coupled between the lever, at a location spaced from the gripping means and the elongate member.

4. A tool according to any preceding claim wherein the mechanical advantage means comprises a lead screw.

5. A tool according to any preceding claim wherein at least one of the elongate member and the lever is open along at least one facing side for accommodating the other one of the elongate member and the lever and/or the mechanical advantage means when not in use.

6. A tool for loosening a wheel nut, the tool comprising a lever non-rotatably secured to means for engaging a first wheel nut, and mechanical advantage means for generating an output force alone a line of action which is greater than an input force applied thereto, a first end of the mechanical advantage means being coupled to the lever at a location spaced from the engaging means and a second end of the mechanical advantage means on the line of action having locating means for engaging a first fixed part of the wheel spaced from said wheel nut.

7. A tool according to any preceding claim wherein the first fixed part is a wheel nut.

8. A tool according to any preceding claim wherein said engaging means for said fixed part is an internally cylindrical hollow socket, or an internally faceted hollow socket rotatably mounted to the elongate means.

9. A tool for loosening a wheel nut, the tool comprising means arranged to provide a fixed location relative to a wheel, at least while the nut to be loosened remains fast, a lever provided with nut engaging means at a first location, and mechanical advantage means coupled between the fixed location and a second location on the lever spaced from the first location, the mechanical advantage means being adapted for generating an output force between said fixed location and said second location which is greater than an input force applied thereto, thereby to cause the lever to rotate and loosen a nut gripped by the nut gripping means.

10. A tool according to claim 9 wherein the mechanical advantage means comprises a lead screw.
